(19) Europäisches Patentamt
European Patent Office
Office européen des brevets

(11) **EP 0 991 940 B1**

(12) **EUROPÄISCHE PATENTSCHRIFT**

(45) Veröffentlichungstag und Bekanntmachung des Hinweises auf die Patenterteilung:
**25.08.2010 Patentblatt 2010/34**

(51) Int Cl.:
*B01J 20/281* (2006.01) *B01D 15/08* (2006.01)
*B01D 15/02* (2006.01)

(21) Anmeldenummer: **98933607.8**

(22) Anmeldetag: **12.06.1998**

(86) Internationale Anmeldenummer:
**PCT/EP1998/003546**

(87) Internationale Veröffentlichungsnummer:
**WO 1998/058253 (23.12.1998 Gazette 1998/51)**

(54) **VERWENDUNG MONOLITHISCHER SORBENTIEN FÜR PRÄPARATIVE CHROMATOGRAPHISCHE TRENNVERFAHREN**

USE OF MONOLITHIC SORBENTS FOR PREPARATIVE CHROMATOGRAPHIC SEPARATION

UTILISATION DE SORBANTS POUR PROCEDES DE SEPARATION CHROMATOGRAPHIQUES A USAGE PREPARATIF

(84) Benannte Vertragsstaaten:
**AT BE CH DE DK ES FR GB IT LI NL SE**

(30) Priorität: **18.06.1997 DE 19725639**
**20.06.1997 DE 19726151**
**20.06.1997 DE 19726152**
**19.01.1998 DE 19801575**

(43) Veröffentlichungstag der Anmeldung:
**12.04.2000 Patentblatt 2000/15**

(73) Patentinhaber: **Merck Patent GmbH**
**64271 Darmstadt (DE)**

(72) Erfinder:
• **CABRERA, Karin**
**D-63303 Dreieich (DE)**
• **LUBDA, Dieter**
**D-64625 Bensheim (DE)**
• **SCHULTE, Michael**
**D-65428 Rüsselsheim (DE)**
• **MEUDT, Andreas**
**D-60529 Frankfurt (DE)**
• **LUDEMANN-HOMBOURGER, Olivier**
**F-54502 Vandoeuvre-lès-Nancy (FR)**
• **WIELAND, Gerhard**
**D-64625 Bensheim (DE)**
• **CZERNY, Kristina**
**D-64331 Weiterstadt (DE)**
• **DELP, Axel**
**D-64407 Fränkisch-Crumbach (DE)**
• **DICKS, Edith**
**D-64297 Darmstadt (DE)**
• **KRAUS, Alexander**
**D-64347 Griesheim (DE)**

(56) Entgegenhaltungen:
**WO-A-95/03256    US-A- 4 533 398**
**US-A- 5 399 535**

• **MINAKUCHI H ET AL: "Effect of skeleton size on the performance of octadecylsilylated continuous porous silica columns in reversed-phase liquid chromatography" JOURNAL OF CHROMATOGRAPHY A, Bd. 762, Nr. 1, 21. Februar 1997, Seite 135-146 XP004056545**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft die Verwendung von monolithischen Sorbentien, insbesondere solche, die Separationseffektoren enthalten, für präparative chromatographische Trennverfahren, sowie Verfahren zur präparativen chromatographischen Trennung mindestens zweier Substanzen unter Verwendung monolithischer Sorbentien.

Das Ziel bei präparativen chromatographischen Trennverfahren ist die Isolierung der aufgereinigten Substanz. Im Gegensatz dazu sind analytische chromatographische Trennverfahren auf hohe Selektivität bei geringer Bandenbreite ausgerichtet. Analytische Verfahren dienen nicht zur Isolierung der Substanz, allenfalls schließen sich zusätzliche Analysenverfahren (z.B. Massenspektrometrie, UV/VIS-Spektrometrie) dem Trennverfahren an. Für präparative chromatographische Trennverfahren ist der optimale Kompromiß zwischen chromatographischer Auflösung und Produktivität wesentlich.

Für die Wirtschaftlichkeit von präparativen Stofftrennungen sind die Erzielung hoher Flußraten, kurzer Elutionszeiten und die Einhaltung moderater Betriebsdrücke wesentliche Faktoren. Die Trennleistung einer chromatographischen Säule wird durch die Bodenhöhe (bzw. die Bodenzahl pro Meter) gekennzeichnet. Die Zusammenhänge mit Strömungs- und Diffusionsvorgängen wird durch die van Deemter Gleichung beschrieben. Vergrößert man den Durchmesser der Sorbenspartikel, so verringert sich die Bodenzahl und es muß die Säulenlänge vergrößert werden, um die Trennleistung nicht zu verringern. Wird der Durchmesser der Sorbenspartikel vergrößert, so wird die Bodenzahl in stärkerem Maße abhängig von der Flußrate. Somit ist in vielen Fällen die erreichbare chromatographische Trennleistung im hohen Maße abhängig von der gewählten Flußrate (steile H(u)-Kurve). Die genannten Zusammenhänge sind dem Fachmann grundsätzlich bekannt und in Handbüchern wie z.B. "Handbuch der HPLC" (K.K. Unger, ed.; GIT-Verlag, Darmstadt, DE) beschrieben. Im Gegensatz dazu wurde festgestellt, daß bei der erfindungsgemäßen Verwendung von monolithischen Sorbentien der Porendurchmesser der Makroporen variiert werden kann, ohne daß die Dimension der zwischen den Makroporen befindlichen skeletonphase variiert werden muß. Dadurch kann der Druckabfall durch Wahl eines Sorbens mit größeren Makroporen verringert werden, während die erhöhte Flußrate die Trennleistung kaum beeinflußt.

Bei präparativen Stofftrennungen haben Gegenstromverfahren an Bedeutung gewonnen. Da es technisch nur sehr schwer möglich ist, eine tatsächliche Bewegung einer stationären Phase zu realisieren, wird die Bewegung der stationären Phase simuliert. Dazu wird das gesamte Säulenbett in zyklisch hintereinandergeschaltete Einzelsäulen unterteilt. Die Gesamtzahl der Säulen ist typischerweise ein Vielfaches von vier, da ein solches System vier chromatographische Zonen besitzt. Nach einer definierten Zeit werden die Leitungen umgeschaltet, wodurch eine Bewegung des Säulenbettes in der entgegengesetzten Richtung simuliert wird. Nähere Erläuterungen zur Wirkungsweise der SMB-Chromatographie finden sich beispielsweise in WO 97/47 617 Für das kontinuierliche Verfahren der "simulated moving bed"- Chromatographie (SMB-Chromatographie) werden üblicherweise als Trennmaterialien partikuläre Sorbentien verwendet. Die dabei verwendeten Säulenpackungen lassen keine optimalen Flußraten zu, da der Betriebsdruck bei partikulären Trägern sehr hoch ist. Auch ist die mechanische Stabilität der partikulären Sorbensbetten nicht sehr gut. Weiterhin ist es für die SMB-Chromatographie notwendig, eine Reihe chromatographischer Säulen (typischerweise bis zu 24) mit möglichst gleichen Eigenschaften bereitzustellen. Dies ist bei partikulären Sorbensbetten nur mit großem Aufwand beim Packen der Säulen und bei der Auswahl der gepackten Säulen realisierbar.

Aufgabe der Erfindung ist es, chromatographische präparative Trennverfahren, insbesondere für die SMB-Verfahren bereitzustellen, die bei moderatem Betriebsdruck hohe Flußraten aufweisen.

Es wurde gefunden, daß monolithische Sorbentien für Trennverfahren mit hohen Flußraten eingesetzt werden können; somit kann ein höherer Durchsatz pro Zeiteinheit, d.h. eine verbesserte Produktivität erzielt werden. Die nach erfindungsgemäßen Trennverfahren unter Verwendung von monolithischen Sorbentien erreichbare Produktivität ist typischerweise um eine Größenordnung höher als bei Trennverfahren unter Verwendung von partikulären Sorbentien.

Gegenstand der Erfindung sind Verfahren zur präparativen chromatographischen Trennung mindestens zweier Substanzen nach dem SMB-Verfahren, wobei als stationäre Phase ein monolithisches Sorbens auf der Grundlage von Formkörpern aus $SiO_2$, deren Makroporen Durchmesser zwischen 2 und 20 $\mu$m aufweisen, und deren Mesoporen Durchmesser zwischen 2 und 100 nm aufweisen (jeweils Medianwerte), verwendet wird.

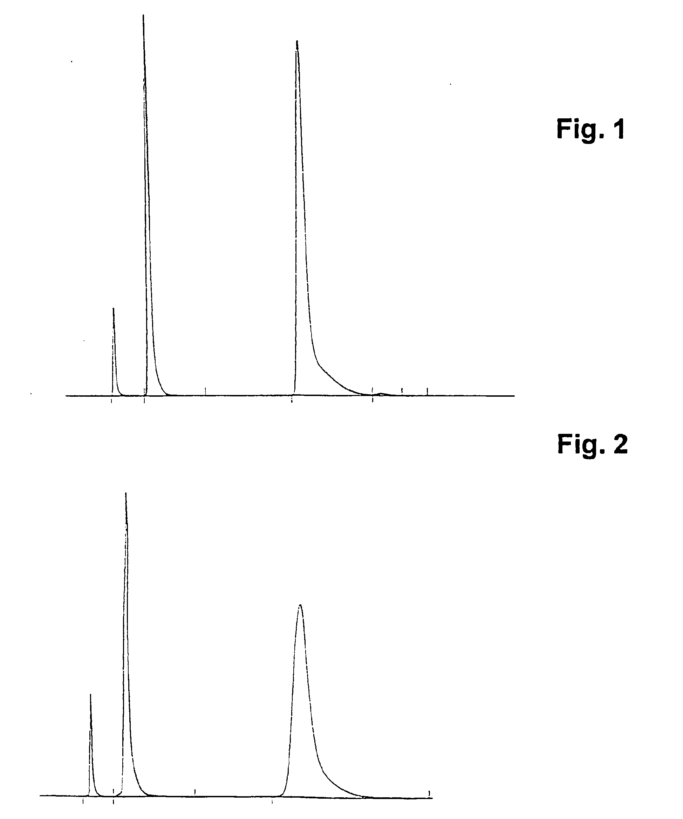

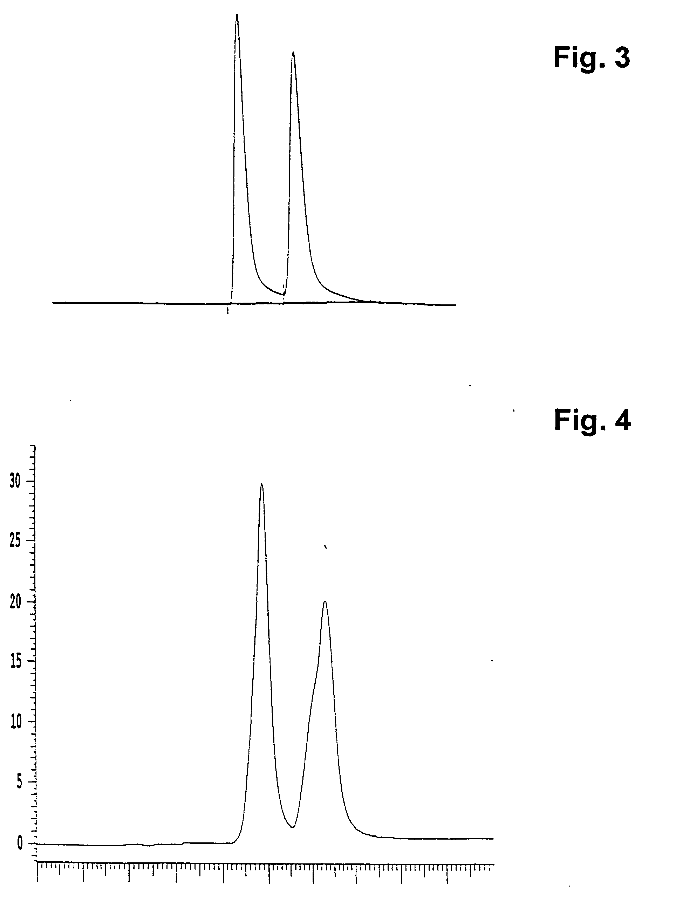

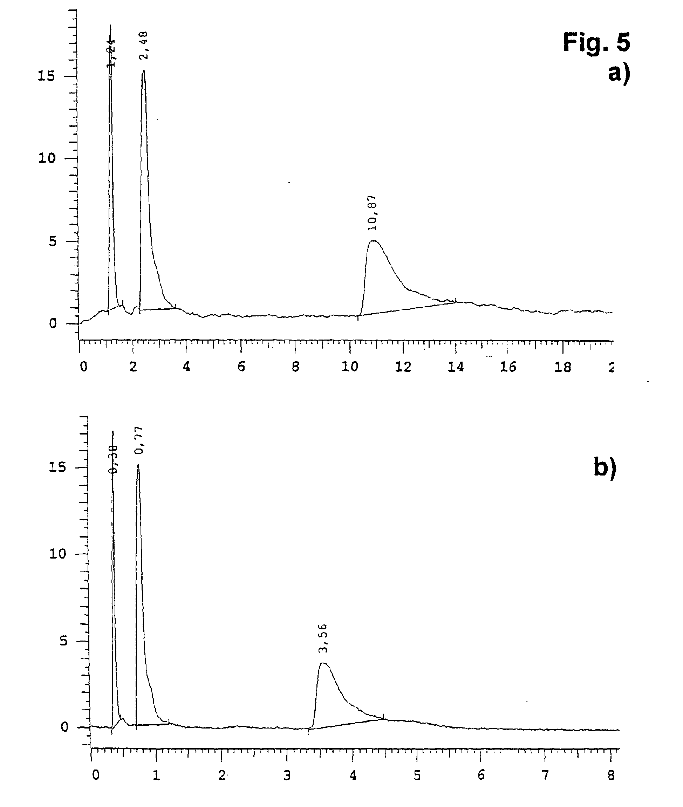

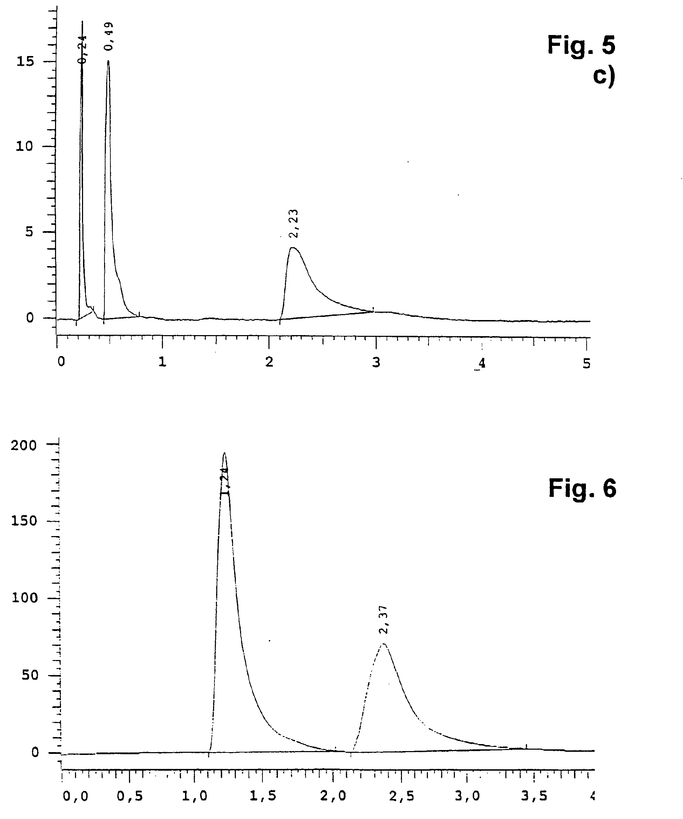

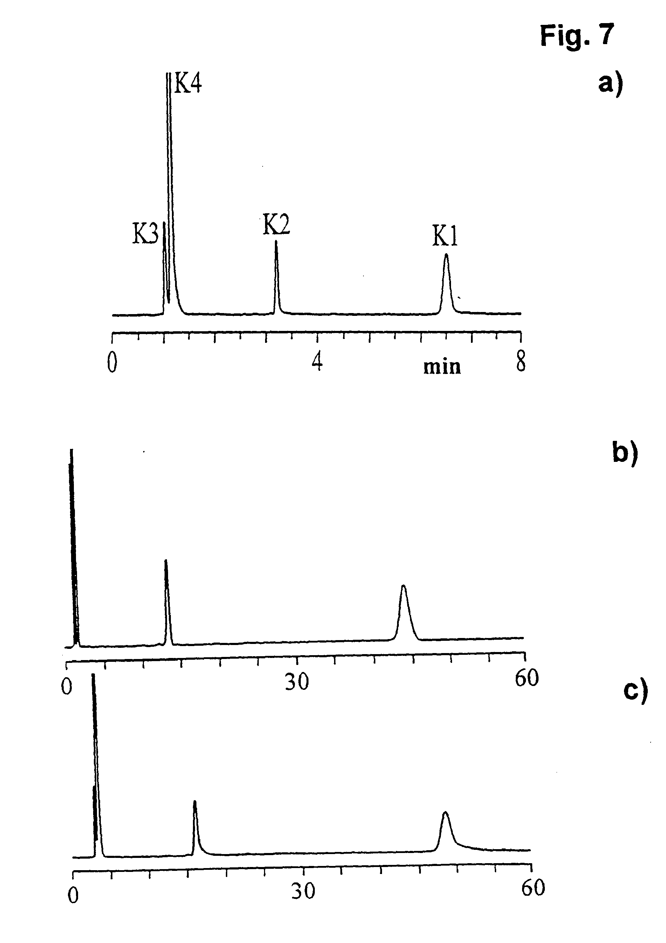

Die Abbildungen 1 und 2 zeigen Trennungen von Toluol, 2- und 3-Nitroacetanilid an zwei unmodifizierten monolithischen Sorbentien mit unterschiedlicher Porenweite der Makroporen, hergestellt nach PCT/EP97/06 980; experimentelle Einzelheiten: siehe Beispiel B1. Abbildung 3 zeigt die Trennung der Enantiomeren von 2,2,2-Trifluor-1-anthrylethanol auf dem nach Beispiel A3 hergestellten chiralen monolithischen Sorbens (Pirkle-type) ; experimentelle Einzelheiten: siehe Beispiel B4. Abbildung 4 zeigt die Trennung von racemischenm Cromakalim an einem Sorbens, das β-Cyclodextrin chemisch gebunden enthält (Herstellung siehe Beispiel A5; experimentelle Einzelheiten siehe Beispiel B6). Abbildung 5 zeigt eine präparative Trennung eines Testgemisches aus Tolulol, 2-Nitroacetanilid und 3-Nitroacetanilid bei unterschiedlichen Fließgeschwindigkeiten der mobilen Phase (Abb. 5a: 40 ml/min; Abb. 5b: 130 ml/min; Abb. 5c: 200 ml/min). Experimentelle Einzelheiten sind in Beispiel B9 beschrieben. Abbildung 6 zeigt die Trennung von Dime-thylphthalat/Dibutylphthalat an einer $C_{18}$-RP-Phase. Experimentelle Einzelheiten sind in Beispiel B10 beschrieben. In der Abbildung 7 sind Elutionsdiagramme von Trennungen verschiedener Vitamine der Vitamin K Gruppe dargestellt:

a) erfindungsgemäße Trennung (isokratisch, Flußgradienten-Chromatographie unter Verwendung eines monolithischen Sorbens);
b) isokratisch unter Verwendung eines monolithischen Sorbens;
c) isokratisch unter Verwendung eines partikulären Sorbens.

Die Teildarstellungen b) und c) dienen dem Vergleich. Experimentelle Einzelheiten sind in Beispiel B11 beschrieben.

Monolithische Sorbentien sind grundsätzlich aus der Literatur bekannt; dazu gehören vor allem poröse keramische Formkörper, wie sie in WO 94/19 687 und in EP 0 710 219 offenbart sind. Besonders bevorzugt sind monolithische Sorbentien auf der Grundlage von porösen Formkörpern, die untereinander verbundene Makroporen sowie Mesoporen in den Wänden der Makroporen aufweisen, wobei der Durchmesser der Makroporen einen Medianwert größer als 0,1 $\mu$m aufweist, und wobei der Durchmesser der Mesoporen einen Medianwert von 2 und 100 nm aufweist. Allerdings sind nach den in den genannten Druckschriften offenbarten Herstellungsverfahren in reproduzierbarer Weise nur poröse keramische Formkörper mit einem Durchmesser von ca. 5 mm oder darunter zugänglich. Eine ähnliche Einschränkung gilt für den Bereich der Makroporen, der nach den in den genannten Druckschriften offenbarten Herstellungsverfahren in reproduzierbarer Weise nur mit Makroporen bis ca. 1 $\mu$m Durchmesser zugänglich sind. Für präparative Anwendungen sind größere Formkörper (Durchmesser ca. 1 cm oder größer) mit weiteren Makroporen bevorzugt zu verwenden. Derartige verbesserte poröse Formkörper sind insbesondere nach Verfahren zugänglich, wie sie in der Patentanmeldung PCT/EP97/06 980 offenbart sind. Diese Verfahren erlauben die reproduzierbare Herstellung von größeren Formkörpern mit weiteren Makroporen. Insbesondere sind monolithische Sorbentien auf der Grundlage von porösen Formkörpern, deren Makroporen Durchmesser zwischen 2 und 20 $\mu$m, insbesondere zwischen 5 und 20 $\mu$m, aufweisen (jeweils Medianwerte), und deren Mesoporen Durchmesser zwischen 2 und 100 nm (Medianwerte) aufweisen. Besonders bevorzugt sind erfindungsgemäß monolithische Sorbentien auf der Grundlage von porösen Formkörpern, deren Makroporen Durchmesser zwischen 10 und 20 $\mu$m aufweisen (jeweils Medianwerte), und deren Mesoporen Durchmesser zwischen 2 und 100 nm (Medianwerte) aufweisen..

Erfindungsgemäß verwendete monolithische Sorbentien bestehen aus anorganischen Materialien, wie sie für partikuläre Sorbentien im Gebrauch sind. In vielen Fällen (z.B. $SiO_2$) können diese Sorbentien ohne weiteres für chromatographische Trennungen verwendet werden. Häufiger jedoch werden die Basisträger derivatisiert, um die Trenneigenschaften zu verbessern; dabei werden zusätzliche Gruppierungen eingeführt, die unter der Bezeichnung Separationseffektoren zusammengefaßt werden.

Separationseffektoren und Verfahren zu ihrer Einführung in den Basisträger sind dem Fachmann grundsätzlich bekannt. Beispiele für Reaktionen, mit denen Separationseffektoren eingeführt werden können, sind:

a) Die Derivatisierung mit Silanderivaten der Formel I

$$SiX_nR^1_{(3-n)}R^2 \text{ I}$$

worin

X      eine reaktive Gruppe, wie z. B. Methoxy, Ethoxy oder Halogen,
$R^1$      $C_1$ - $C_5$ -Alkyl,
n      1, 2 oder 3

bedeuten und
$R^2$ eine der im folgenden angegebene Bedeutungen besitzt:

a1) unsubstituiertes oder substituiertes Alkyl oder Aryl, wie z.B. n-Octadecyl, n-Octyl, Benzyl- oder Cyanopropyl;
a2) anionische oder saure Reste, wie z.B. Carboxypropyl;
a3) kationische oder basische Reste, wie z.B. Aminopropyl, Diethylaminopropyl oder Triethylammoniumpropyl;
a4) hydrophile Reste, wie z.B. (2,3-Dihydroxypropyl)-oxypropyl;
a5) bindungsfähige aktivierte Reste, wie z.B. (2,3-Epoxypropyl)-oxypropyl.

b) Die Adsorption oder chemische Bindung von Polymeren wie Polybutadien, Siloxanen, Polymeren auf der Grundlage von Styrol/ Divinylbenzol, von (Meth)acrylsäurederivaten oder von anderen Vinylverbindungen, sowie von Peptiden, Proteinen, Polysacchariden und Polysaccharidderivaten an dem Basisträger;

c) Die chemische Bindung von unter b) genannten Polymeren über die unter a) genannten Derivate; dazu gehören Pfropfpolymerisate von Poly(meth)acrylsäurederivaten auf diolmodifiziertem Kieselgel nach EP-B-0 337 144.

d) Die Adsorption oder chemische Bindung von chiralen Phasen, wie z.B. von Aminosäurederivaten, Peptiden oder Proteinen, oder von Cyclodextrinen, Polysacchariden oder Polysaccharidderivaten.

Weitere gebräuchliche Derivatisierungsmöglichkeiten und Derivatisierungsverfahren sind dem Fachmann bekannt und in gängigen Handbüchern wie Unger, K.K. (ed) Porous Silica, Elsevier Scientific Publishing Company (1979) oder Unger, K.K. Packings and Stationary Phases in Chromatographic Techniques, Marcel Dekker (1990) beschrieben.

Weitere Beispiele für verschiedene Separationseffektoren und für Verfahren, die Separationseffektoren in monolithische Sorbentien einzuführen, sind in den folgenden Druckschriften genannt:

a) Aus DE 38 11 042 sind unter anderem Monomere bekannt, die zur Herstellung von Ionenaustauschern geeignet sind; dazu gehören beispielsweise Acrylsäure, N-(Sulfoethyl)-acrylamid, 2-Acrylamido-2-methylpropansulfonsäure, N,N-Dimethylaminoethyl-acrylamid, N,N-Diethylaminoethyl-acrylamid, sowie Trimethylammoniumethyl-acrylamid. Andere in dieser Druckschrift genannte Monomere erlauben die Bindung von Affinitätsliganden oder von Enzymen, oder eignen sich für reversed phase Chromatographie: dazu gehören beispielsweise Acrylsäure, Acrylamid, Allylamin oder Acrylnitril.

b) Aus DE 43 10 964 sind Monomere bekannt, die einen Oxiranring, einen Azlactonring oder eine Gruppierung enthalten, die in einen Azlactonring umgesetzt werden kann. Polymere, die derartige Monomere enthalten, sind besonders gut für die Bindung von Affinitätsliganden oder von Enzymen geeignet. Affinitätsliganden sind beispielhaft in DE 43 10 964 offenbart.
Weiterhin können die Epoxidgruppen in derartigen Polymeren in vorteilhafter Weise weiter umgesetzt werden, wodurch Ionenaustauscher, thiophile Sorbentien oder Sorbentien für die Metallchelat- oder die hydrophobe Chromatographie bereitgestellt werden. Dabei werden beispielsweise Phosphorsäure, Ammoniak, Diethylamin, Trimethylamin, schweflige Säure oder auch Komplexbildner wie Iminodiessigsäure an den Oxiranring addiert.
Die Herstellung von thiophilen Sorbentien und von Sorbentien für die Metallchelatchromatographie ist in DE 43 10 964 offenbart.
In DE 43 33 674 und in DE 43 33 821 sind derartige Umsetzungen, mit derer Hilfe Ionenaustauscher bereitgestellt werden können, offenbart.
In DE 43 23 913 werden Sorbentien für die hydrophobe Interaktionschromatographie beschrieben.

Chirale Trennmaterialien für die Trennung von Enantiomeren sind in großer Anzahl im Stand der Technik bekannt. Es handelt sich ausschließlich um partikuläre Trennmaterialien. Die bekannten chiralen Trennmaterialien bestehen entweder aus der chiralen Verbindung selbst (zum Beispiel Cellulosetriacetat) oder aber ein chiraler Separationseffektor ist auf einen Träger aufgezogen oder chemisch an einen Träger gebunden (z.B. chemisch gebundene Aminosäurederivate). Außerdem ist es möglich, chirale Separationseffektoren, die mit einer stationären Phase in Wechselwirkung treten, im Elutionsmittel zuzusetzen (dynamische Belegung mit z.B. Cyclodextrinen).

Chirale Separationseffektoren sind in großer Zahl bekannt; die wichtigsten Gruppen bekannter chiraler Separationseffektoren sind:

a) Aminosäuren und ihre Derivate, z.B. L-Phenylalanin, oder D-Phenylalanin, Ester oder Amide von Aminosäuren oder acylierte Aminosäuren oder Oligopeptide;
b) natürliche und synthetische Polymere mit einer Asymmetrie oder Dissymmetrie in der Hauptkette; dazu gehören Proteine (z. B. saures $\alpha_1$-Glycoprotein, Rinderserumalbumin, Cellulase; siehe J. Chrom. 264, Seiten 63 -68 (1983), J. Chrom. 269, Seiten 71 - 80 (1983), WO 91/12 221), Cellulose und Cellulosederivate, sowie andere Polysaccharide und deren Derivate (z.B. Cellulosetribenzoat, Cellulosetribenzylether, Cellulose-trisphenylcarbamat, Cellulose-tris-3-chlorobenzoat, Amylose-tris-(3,5-dimethylphenylcarbamat), Cellulose-tris-(3,5-dimethylbenzoat), Cellulose-tris-(3,5-dimethylphenylcarbamat); siehe EP 0 147 804, EP 0 155 637, EP 0 718 625);
c) Cyclodextrine und seine Derivate (z.B. J. High Resol.Chrom. & Chromat. Comm. 3, Seiten 147 - 148 (1984); EP 0 407 412; EP 0 445 604);
d) Polymere mit Asymmetriezentren in der Seitenkette (z.B. EP 0 249 078; EP 0 282 770; EP 0 448 823).
e) Polymere, die Hohlräume aufweisen, wobei die Hohlräume ein Abdruck des Analyten darstellen (imprinted polymers; WO 93/09 075).

Die enantiomerenrein vorliegenden chiralen Separationseffektoren können an einen geeigneten Basisträger, gegebenenfalls nach Derivatisierung adsorbiert werden. Es ist auch möglich, die enantiomerenrein vorliegenden chiralen Separationseffektoren, gebenenfalls nach Einführung geeigneter funktioneller Gruppen, an den Basisträger zu binden. Für diesen Zweck können auch bifunktionelle Reagenzien verwendet werden. Für diese Verfahrensvarianten geeignete Umsetzungen sind dem Fachmann bekannt und sind in gängigen Handbüchern beschrieben.

In den Beispielen sind erfindungsgemäß geeignete Formkörper mit chiralen Separationseffektoren genannt.

Weitere Einzelheiten der Herstellung der verschiedenen Sorbentien und deren Verwendung können den oben genannten Druckschriften entnommen werden; die diesbezügliche Offenbarung dieser Druckschriften ist durch Bezugnahme in die vorliegende Anmeldung eingeführt.

Die oben genannten monolithischen Sorbentien können in Vorrichtungen zur Stofftrennung enthalten sein, die sich im wesentlichen wie chromatographische Säulen handhaben lassen. Dabei können die bekannten Trennverfahren angewandt werden: batch-Verfahren, kontinuierliche Verfahren, wie z.B. das simulated moving bed (SMB) Verfahren, oder andere Gegenstromverfahren, wie sie beispielsweise in US 5,630,943 offenbart werden.

Es wurde gefunden, daß bei Verwendung dieser bevorzugten Sorbentien die Flußgeschwindigkeit über einen weiten Bereich variiert werden kann, ohne daß die Trenneigenschaften dabei verschlechtert werden. Unter Ausnutzung dieser Eigenschaft ist es möglich, die Flußgeschwindigkeit an das Elutionsprofil anzupassen, ohne daß die Trennleistung verringert wird. Dadurch kann der Zeitbedarf der Trennung stark reduziert werden. Insbesondere für präparative Trennungen ergeben sich somit große Vorteile. Für die Anwendung des SMB-Verfahrens ist auch der geringe Druckabfall bei hoher Flußgeschwindigkeit relevant, da bei diesem Verfahren eine Anzahl Säulen hintereinander geschaltet werden. Durch Variation der Flußgeschwindigkeit (Flußgradient) ist es außerdem möglich, das Auflösungsvermögen dem Trennproblem anzupassen (siehe Beispiel B11).

Auch ohne weitere Ausführungen wird davon ausgegangen, daß ein Fachmann die obige Beschreibung im weitesten Umfang nutzen kann. Die bevorzugten Ausführungsformen und Beispiele sind deswegen lediglich als beschreibende, keineswegs als in irgendeiner Weise limitierende Offenbarung aufzufassen.

## Beispiele:

Die folgende Beispiele soll die Erfindung verdeutlichen; sie bedeuten keine Einschränkung des Erfindungsgedankens.

Im folgenden wird unter Raumtemperatur eine Temperatur zwischen 15 und 30°C verstanden.

## A Herstellungsbeispiele

### Herstellungsbeispiel A1: Herstellung eines mit einer $C_{18}$-reversed phase modifizierten monolithischen Sorbens

Ein poröser Formkörper (83 * 7,2 mm; 2 $\mu$m Porenweite) bestehend aus $SiO_2$ hergestellt nach PCT/EP97/06 980 wird nach Standardverfahren mit Methyloctacecyldichlorsilan als Silanderivat umgesetzt und anschließend einer endcapping Reaktion unterworfen; dabei werden die Reaktionslösungen durch den Formkörper gepumpt.

Es wird ein RP-18 modifiziertes monolithisches Trennmaterial erhalten. In analoger Weise werden RP-18-modifizierte monolithische Trennmaterialien der Abmessungen 93 x 25 mm, deren Makroporen 2 beziehungsweise 6 $\mu$m Durchmesser (Medianwerte) aufweisen, erhalten.

### Herstelluncisbeispiel A2: Herstellung eines mit Aminogruppen modifizierten monolithischen Sorbens

Ein poröser Formkörper (83 * 7,2 mm, 2 $\mu$m Porenweite), hergestellt nach PCT/ EP97/06 980, wird nach Standardverfahren durch Hindurchpumpen von einer Lösung von Aminopropyltrimethoxysilan in Toluol zu einem mit Aminogruppen modifizierten Sorbens umgesetzt.

### Herstellungsbeispiel A3: Herstellung eines mit (R)-(-)-N-(2,4-Dinitrobenzoyl)phenylglycin modifizierten monolithischen Sorbens (Pirkle-type modifiziertes chirales Sorbens)

Der nach Beispiel A2 hergestellte mit Aminogruppen derivatisierte poröse Formkörper wird weiter umgesetzt, indem eine Lösung von (R)-(-)-N-(2,4-Dinitrobenzoyl)phenylglycin und N-Ethoxycarbonyl-2-ethoxy-1,2-dihydrochinolin (EEDQ) in Toluol durchgepumpt wird. Es wird ein chirales Sorbens erhalten.

### Herstellungsbeispiel A4: Herstellung eines mit N-Acryloyl-L-phenylalaninethylester als Monomereinheiten modifizierten monolithischen Sorbens

Ein poröser Formkörper (83 * 7,2 mm; 2 $\mu$m Porenweite), hergestellt nach EP 0 710 219, wird durch Hindurchpumpen von a) einer Lösung von 3-Glycidyloxypropyltrimethoxysilan in Toluol und b) einer Lösung von N-Acryloyl-L-phenylalaninethylester in Toluol unter Zusatz von Azoisobutyronitril (AIBN) zu einem chiral modifizierten Sorbens umgesetzt.

Es wird ein modifizierter monolithischer Formkörper erhalten, an dem als Separationseffektoren kovalent gebundene L-Phenylalaninethylester-Gruppen vorliegen.

**Herstellungsbeispiel A5: Herstellung eines chiralen monolithischen Sorbens, an das β-Cyclodextrin chemisch gebunden ist**

Ein poröser Formkörper, hergestellt nach PCT/EP97/06 980, wird analog zu der Beschreibung von Beispiel 2 aus EP 0 445 604 mit einer Reaktionslösung aus β-Cyclodextrin, Chlorameisensäure-p-nitrophenylester und 3-(2-Aminoethyl)aminopropyltrimethoxysilan zu einem chiralen Sorbens mit chemisch gebundenem β-Cyclodextrin umgesetzt. Dazu wird die Reaktionslösung durch den Formkörper gepumpt.

Es wird ein modifizierter monolithischer Formkörper erhalten, an dem β-Cyclodextrin chemisch gebunden vorliegt.

**B Anwendungsbeispiele**

**Anwendungsbeispiel B1: Trennung von Toluol, 2-Nitroacetanilid und 3-Nitroacetanilid an monolithischen Sorbentien mit verschiedenen Durchmesser der Makroporen**

Poröse monolithische Formkörper aus $SiO_2$ (83 * 7,2 mm) mit unterschiedlichen Durchmesser der Makroporen (2 und 6 μm) wurden nach PCT/EP97/06 980 hergestellt. Eine Lösung von Toluol, 2- und 3-Nitroacetanilid wird aufgetragen und in Heptan/Dioxan 80 : 20 als Laufmittel getrennt (Flußrate: 8 ml/min; UV-Detektion).

Die Elutionsdiagramme sind in den Abbildungen 1 (2 μm Porenweite) und 2 (6 μm Porenweite) dargestellt.

**Anwendungsbeispiel B2: Trennung von Dimethylphthalat und Dibutylphthalat an einem mit einer $C_{18}$-reversed phase modifizierten monolithischen Sorbens**

Eine Lösung von Dimethylphthalat und Dibutylphthalat wird auf eine Säule mit einem monolithischen Sorbens hergestellt nach Beispiel A1 aufgetragen und in Methanol/Wasser 90 : 10 als Laufmittel getrennt (Flußrate 4 ml/min; UV-Detektion).

Die Substanzen werden getrennt eluiert.

**Anwendungsbeispiel B3: Trennung an einem mit Aminogruppen modifizierten monolithischen Sorbens**

Eine Lösung von Xylose, Fructose, Glucose und Saccharose werden auf dem auf dem mit Aminopropyltrimethoxysilan modifizierten Sorbens hergestellt nach Beispiel A2 aufgetragen und mit Acetonitril/Wasser 80:20 als Flußmittel aufgetrennt (Flußrate 4 ml/min; RI-Detektion).

Die Saccharide werden getrennt eluiert.

**Anwendunqsbeispiel B4: Trennung an einem mit (R)-(-)-N-(2,4-Dinitrobenzoyl)phenylglycin modifizierten monolithischen Sorbens (Pirkle-type modifiziertes chirales Sorbens)**

Die Enantiomeren von 2,2,2-Trifluor-1-anthrylethanol werden auf dem nach Beispiel A3 hergestellten chiralen Pirkle-type Sorbens in Heptan/i-Propanol 99,5 : 0,5 getrennt (Flußrate: 8 ml/min; UV-Detektion).

Das Elutionsdiagramm ist in Abbildung 3 dargestellt.

**Anwendunqsbeispiet B5: Trennung an einem mit N-Acryloyl-L-phenylalaninethylester als Monomereinheiten modifizierten monolithischen Sorbens**

Die Enantiomeren von Chlorthalidon werden auf dem nach Beispiel A4 hergestellten chiralen Sorbens getrennt (Bedingungen: Heptan/Dioxan 50 : 50; 4 ml/min; UV-Detektion).

**Anwendunqsbeispiel B6: Trennung von racemischem Cromakalim an einem chiralen Sorbens, das ß-Cyclodextrin chemisch gebunden enthält**

Ein entsprechend Beispiel A5 hergestellter modifizierter monolithischer Formkörper (83 x 7,2 mm) wird als Sorbens verwandt und racemisches Cromakalim unter folgenden Bedingungen aufgetrennt:

| | |
|---|---|
| Probe: | Cromakalim (0,2 mg/ml in Ethanol) |
| | Injektionsvolumen: 5 µl |
| Eluent: | Methanol/Wasser (20/80; v/v) |
| Temperatur: | Raumtemperatur |
| Fluß: | 1,0 ml/min |
| Detektion: | 254 nm |

Das Elutionsdiagramm ist in Abbildung 4 dargestellt.

**Anwendungsbeispiel B7: Trennung von racemischen Chlorthalidon mit dynamischer ß-Cyclodextrinbelegung**

Ein entsprechend Beispiel A1 hergestellter modifizierter monolithischer Formkörper (RP-18; 83 x 7,2 mm) wird als Sorbens verwandt und racemisches Chlorthalidon unter folgenden Bedingungen aufgetrennt:

| | |
|---|---|
| Probe: | Chlorthalidon (0,44 mg/ml) |
| | Injektionsvolumen: 5 µl |
| Eluent: | Methanol/wäßrige 25 mM Natriumphosphatlösung (pH 2) |
| | mit 10 mM ß-Cyclodextrin (20/80; v/v) |
| Temperatur: | Raumtemperatur |
| Fluß: | 1,0 ml/min |
| Detektion: | 254 nm |

Die Enantiomeren werden getrennt eluiert.

**Anwendungsbeispiel B8: Trennung von racemischen Prominal mit dynamischer ß-Cyclodextrinbelegung**

Ein entsprechend Beispiel A1 hergestellter modifizierter monolithischer Formkörper (RP-18; 83 x 7,2 mm) wird als Sorbens verwandt und racemisches Prominal unter folgenden Bedingungen aufgetrennt:

| | |
|---|---|
| Probe: | Prominal (0,55 mg/ml) |
| | Injektionsvolumen: 5 µl |
| Eluent: | Methanol/wäßrige 25 mM Natriumphosphatlösung (pH 2) |
| | mit 10 mM ß-Cyclodextrin (20/80; v/v) |
| Temperatur: | Raumtemperatur |
| Fluß: | 1,0ml/min |
| Detektion: | 254 nm |

Die Enantiomeren werden getrennt eluiert.

**Anwendungsbeispiel B9: Trennung von Toluol, 2-Nitroacetanilid und 3-Nitroacetanilid bei verschiedenen Fließgeschwindigkeiten**

Eine Probe enthaltend Toluol, 2-Nitroacetanilid und 3-Nitroacetanilid wird bei unterschiedlichen Fließgeschwindigkeiten der mobilen Phase getrennt:

Bedinaungen:

| | |
|---|---|
| Sorbens: | monolithisches Sorbens (SiO$_2$; 93 * 25 mm) |
| | (hergestellt nach PCT/ EP97/06 980) |
| mobile Phase: | n-Heptan/Dioxan (90/10; v/v) |
| Probenvolumen: | 40 µl |

(fortgesetzt)

| Detektion: | UV 254 nm |
|---|---|
| Flußrate: | 40, 130, 200 ml/min |

|  | Abb.5a | Abb.5b | Abb. 5c |
|---|---|---|---|
| Flußrate [ml/min] | 40 | 130 | 200 |
| Bodenzahl [N] 2-Nitroacetanilid | 503 | 524 | 495 |
| Bodenzahl [N] 3-Nitroacetanilid | 465 | 465 | 445 |
| Druck [bar] | 9 | 35 | 55 |

Die Ergebnisse sind in den Abbildungen 5a - 5 c) zusammengefaßt. Die übliche Fließgeschwindigkeit einer Säule der Dimension 25 mm Durchmesser, die mit partikulären Teilchen gepackt ist, beträgt 40 ml/min. Die nichtpartikulären Träger lassen somit eine wesentlich höhere Betriebsgeschwindigkeit zu, was zu deutlich verbesserter Ökonomie der Trennaufgaben führt.

**Anwendungsbeispiel B10: Ermittlung der Prozeßparameter für eine SMB-Trennung von Dimethylphthalat und Dibutylphthalat**

Dimethylphthalat und Dibutylphthalat werden in verschiedenen Mengen aufgetragen und getrennt (siehe Fig. 6):

Bedingungen:

| Sorbens: | monolithisches Sorbens ($C_{18}$-RP-derivatisiertes $SiO_2$; 93 * 25 mm; hergestellt nach PCT/EP97/06 980, entsprechend Beispiel A2 modifiziert) |
|---|---|
| mobile Phase: | Methano1A/Vasser (80/20; v/v) |
| Probenvolumen: | 50, 100 300, 600 μl |
| Detektion: | UV 300 nm |
| Flußrate: | 40 ml/min |

Für die Komponenten A (Dimethylphthalat) und B (Dibutylphthalat) wurden folgende modifizierten Langmuir-Isothermen gefunden:

$$\overline{C}_A = 1{,}1 \bullet C_A + \frac{0{,}0735 \bullet C_A}{1 + 0{,}000735 \bullet C_A + 0{,}0175 \bullet C_B}$$

$$\overline{C}_B = 1{,}1 \bullet C_B + \frac{1{,}75 \bullet C_B}{1 + 0{,}000735 \bullet C_A + 0{,}0175 \bullet C_B}$$

Aus den ermittelten Isothermen wurden nach dem in R.M.Nicoud, F.Charton, J.Chromatogr. 702 (1995) 97 beschriebenen Verfahren mit Hilfe der Simulationssoftware HELP die Trennbedingungen für die SMB-Trennung bestimmt:

| Säulendimension [mm] | 93 * 25 |
|---|---|
| Anzahl Säulen | 8 |

(fortgesetzt)

| Säulendimension [mm] | 93 * 25 |
|---|---|
| Flußrate Feed [ml/min] | 1,9 |
| Feedkonzentration [g/l] | 320 +320 |
| Flußrate Recycling [ml/min] | 44,1 |
| Flußrate Raffinat [ml/min] | 2,9 |
| Flußrate Extrakt [ml/min] | 21,8 |
| Zyklussschaltzeit [min] | 2,24 |
| Konzentration Raffinat [g/l] | 209,7 |
| Konzentration Extrakt [g/l] | 27,89 |
| Reinheiten Raffinat/Extrakt | > 99,9 |

**Anwendungsbeispiel B11: Trennung verschiedener Vitamine der Vitamin K Gruppe**

Eine Mischung von Vitaminen der K-Gruppe, die die Vitamine $K_1$, $K_2$, $K_3$ und $K_4$ enthält, wird in Acetonitril-Wasser (95:5; v:v) gelöst. 10 μl dieser Lösung werden auf eine monolithische Säule (Kieselgel, Modifikation RP-18; 83 x 7,2 mm) aufgetragen. Anschließend wird ein Flußgradient angewandt:

| Minuten | Flußrate (ml/min) |
|---|---|
| 0,0-1,5 | 3,0 |
| 1,5-3,0 | 3,0-9,5 |
| 3,0-8,0 | 9,5 |

Das Elutionsdiagramm ist in Abbildung 7 a) dargestellt (Detektion UV bei 280 nm).

Zum Vergleich ist in Abbildung 7 b) ein Elutionsdiagramm bei konstanter Flußrate (1 ml/min) dargestellt (Sorbens wie oben). In Abbildung 7 c) ist als weiterer Vergleich das Elutionsdiagramm unter Verwendung eines partikulären Sorbens (LiChrospher RP 18; 1 ml/min) dargestellt.

**C Vergleichsbeispiele**

**Vergleichsbeispiel C1: Vergleich der Trennung an einem partikulären Sorbens mit der Trennung an einem monolithischen Sorbens**

Die Produktivität eines LiChrospher® Si 100 15 μm Sorbens wird mit der eines monolithischen Sorbens hergestellt nach PCT/EP97/06 980 verglichen. Das monolithische Sorbens weist genau wie das handelsübliche partikuläre Sorbens LiChrospher® Mesoporen mit 10 nm Porenweite auf. Die Partikelgröße des LiChrospher® Si100 beträgt 15 μm. Das monolithische Sorbens weist eine Skeleton size von 1,5-2 μm und Makroporen von 6 μm auf.

Für das partikuläre Sorbens wurden folgende Kenndaten gefunden:

$$\frac{\Delta P}{L}(bar\,/\,m) = 26540 * u(m\,/\,\sec)$$

$$H(m) = 0{,}03657 * u(m\,/\,\sec) + 5{,}5.10^{-5} \quad \text{für } u > 2.10^{-3}\,m\,/\,\sec$$

Für das monolithische Sorbens wurden folgende Kenndaten gefunden:

$$\frac{\Delta P}{L}(bar \, / \, m) = 8500 \, {}^{*} u(m \, / \, \sec)$$

$$H(m) = 0,00403 \, {}^{*} u(m \, / \, \sec) + 1,8.10^{-5} \ \text{für u} > 2.10^{-3} m \, / \, \sec$$

Die beste Produktivität ist erreicht, wenn man gerade bei der gewünschten Bodenzahl bei maximalem Druckabfall arbeitet. Die optimale Fließmittelgeschwindigkeit und Säulenlänge sind dann :

|  | partikuläres Sorbens (LiChrospher® Si 100 15$\mu$m) | monolithisches Sorbens (6$\mu$m Porendurchmesser) |
|---|---|---|
| Fließmittelgeschwindigkeit (cm/min) | 23,1 | 132,4 |
| Säulenlänge (cm) | 98,0 | 53,3 |

Die Geschwindigkeit ist dann auf dem partikulären Sorbens 5,7mal größer. Die Produktivität (g/Tag) ist dann für denselben Säulendurchmesser vierfach erhöht. Da die erforderliche Säulenlänge kürzer ist, ist die relative Produktivität (g/Tag/L stationäre Phase) um den Faktor 10,5 erhöht.

## Patentansprüche

1. Verfahren zur präparativen chromatographischen Trennung mindestens zweier Substanzen, **dadurch gekennzeichnet, dass** die Stofftrennung

   a) unter Verwendung monolithischer Sorbentien auf der Grundlage von Formkörpern aus SiO$_2$ erfolgt, deren Makroporen Durchmesser zwischen 2 und 20 $\mu$m aufweisen, und deren Mesoporen Durchmesser zwischen 2 und 100 nm aufweisen (jeweils Medianwerte), und welche durch Separationseffektoren in Form von chiralen Phasen derivatisiert sind,
   und
   b) kontinuierlich durch "simulated moving bed" Chromatographie erfolgt.

2. Verfahren nach Anspruch 1, weiterhin **dadurch gekennzeichnet, dass** die Stofftrennung unter Verwendung monolithischer Sorbentien, welche durch Adsorption oder chemische Bindung von chiralen Phasen ausgewählt aus der Gruppe Aminosäurederivate, Peptide oder Proteine, Cyclodextrine und Polysaccharide oder Polysaccharidderivate derivatisiert sind, durchgeführt wird.

3. Verfahren nach den Ansprüchen 1 und 2, weiterhin **dadurch gekennzeichnet, dass** die Stofftrennung unter Verwendung monolithischer Sorbentien, welche durch Cyclodextrine und seine Derivate derivatisiert sind, durchgeführt wird.

4. Verfahren nach Anspruch 1, weiterhin **dadurch gekennzeichnet, dass** die Stofftrennung unter Verwendung monolithischer Sorbentien, welche durch natürliche oder synthetische Polymere mit einer Asymmetrie oder Dissymmetrie in der Hauptkette derivatisiert sind, durchgeführt wird.

5. Verfahren nach Anspruch 4 **dadurch gekennzeichnet, dass** die Stofftrennung unter Verwendung monolithischer Sorbentien, welche durch Cellulose und Cellulosederivate aus der Gruppe Cellulosetriacetat, Cellulosetribenzoat, Cellulosetribenzylether, Cellulose-tris-phenylcarbamat, Cellulose-tris-3-chlorbenzoat, Amylose-tris-(3,5-dimethylphenylcarbamat), Cellulose-tris-(3,5-dimethylbenzoat), Cellulose-tris-(3,5-dimethylphenylcarbamat) derivatisiert sind, durchgeführt wird.

6. Verfahren nach einem oder mehreren der Ansprüche 3 bis 5, **dadurch gekennzeichnet, dass** es zur Trennung von Enantiomeren durchgeführt wird.

**Claims**

1. Method for the preparative chromatographic separation of at least two substances, **characterised in that** the substance separation is carried out

   a) using monolithic sorbents based on moulded bodies comprising $SiO_2$ whose macropores have diameters between 2 and 20 $\mu$m and whose mesopores have diameters between 2 and 100 nm (in each case median values) and which have been derivatised by separation effectors in the form of chiral phases, and
   b) continuously by simulated moving bed chromatography.

2. Method according to Claim 1, furthermore **characterised in that** the substance separation is carried out using monolithic sorbents which have been derivatised by adsorption or chemical bonding of chiral phases selected from the group of amino acid derivatives, peptides or proteins, cyclodextrins and polysaccharides or polysaccharide derivatives.

3. Method according to Claims 1 and 2, furthermore **characterised in that** the substance separation is carried out using monolithic sorbents which have been derivatised by cyclodextrins and derivatives thereof.

4. Method according to Claim 1, furthermore **characterised in that** the substance separation is carried out using monolithic sorbents which have been derivatised by natural or synthetic polymers having an asymmetry or dissymmetry in the main chain.

5. Method according to Claim 4, **characterised in that** the substance separation is carried out using monolithic sorbents which have been derivatised by cellulose and cellulose derivatives from the group of cellulose triacetate, cellulose tribenzoate, cellulose tribenzyl ether, cellulose trisphenyl carbamate, cellulose tris-3-chlorobenzoate, amylose tris (3,5-dimethylphenylcarbamate), cellulose tris(3,5-dimethylbenzoate), cellulose tris(3,5-dimethylphenylcarbamate).

6. Method according to one or more of Claims 3 to 5, **characterised in that** it is carried out for the separation of enantiomers.


**Revendications**

1. Méthode de séparation chromatographique préparative d'au moins deux substances, **caractérisée en ce que** la séparation des substances est réalisée

   a) en utilisant des sorbants monolithiques à base de corps moulés comprenant du $SiO_2$ dont les macropores ont des diamètres compris entre 2 et 20 $\mu$m et dont les mésopores ont des diamètres compris entre 2 et 100 nm (dans chaque cas des valeurs médianes) et qui ont été dérivés par des effecteurs de séparation sous forme de phases chirales, et
   b) de façon continue par chromatographie à lit mobile simulé.

2. Méthode selon la revendication 1, **caractérisée en outre en ce que** la séparation de substances est réalisée en utilisant des sorbants monolithiques qui ont été dérivés par adsorption ou par liaison chimique de phases chirales sélectionnées parmi le groupe constitué par les dérivés d'acides aminés, les peptides ou les protéines, les cyclodextrines et les polysaccharides ou les dérivés de polysaccharides.

3. Méthode selon les revendications 1 et 2, **caractérisée en outre en ce que** la séparation de substances est réalisée en utilisant des sorbants monolithiques qui ont été dérivés par des cyclodextrines et des dérivés de celles-ci.

4. Méthode selon la revendication 1, **caractérisée en outre en ce que** la séparation de substances est réalisée en utilisant des sorbants monolithiques qui ont été dérivés par des polymères naturels ou synthétiques ayant une asymétrie ou une dissymétrie dans la chaîne principale.

5. Méthode selon la revendication 4, **caractérisée en ce que** la séparation de substances est réalisée en utilisant des sorbants monolithiques qui ont été dérivés par la cellulose et les dérivés de cellulose choisis dans le groupe constitué par le triacétate de cellulose, le tribenzoate de cellulose, la cellulose tribenzyléther, le trisphényl carbamate de cellulose, le tris-3-chlorobenzoate de cellulose, le tris(3,5-diméthylphénylcarbamate) d'amylose, le tris(3,5-diméthylbenzoate) de cellulose et le tris-(3,5-diméthylphénylcarbamate) de cellulose.

6. Méthode selon l'une ou plusieurs des revendications 3 à 5, **caractérisée en ce qu'**elle est réalisée pour la séparation d'énantiomères.

**Fig. 1**

**Fig. 2**

**Fig. 3**

**Fig. 4**

**Fig. 5**
**a)**

**b)**

Fig. 5
c)

Fig. 6

**Fig. 7**

a)

b)

c)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9747617 A
- EP 9706980 W
- WO 9419687 A
- EP 0710219 A
- EP 0337144 B
- DE 3811042
- DE 4310964
- DE 4333674
- DE 4333821
- DE 4323913

- WO 9112221 A
- EP 0147804 A
- EP 0155637 A
- EP 0718625 A
- EP 0407412 A
- EP 0445604 A
- EP 0249078 A
- EP 0282770 A
- EP 0448823 A
- WO 9309075 A
- US 5630943 A

**In der Beschreibung aufgeführte Nicht-Patentliteratur**

- Porous Silica. Elsevier Scientific Publishing Company, 1979
- **Unger, K.K.** Packings and Stationary Phases in Chromatographic Techniques. Marcel Dekker, 1990
- *J. Chrom.,* 1983, vol. 264, 63-68

- *J. Chrom.,* 1983, vol. 269, 71-80
- *J. High Resol.Chrom. & Chromat. Comm.,* 1984, vol. 3, 147-148
- **R.M.Nicoud ; F.Charton.** *J.Chromatogr.,* 1995, vol. 702, 97